# EUROPEAN PATENT APPLICATION

(11) **EP 1 798 266 A2**
(43) Date of publication of application: **20.06.2007**
(21) Application number: 05812635.0
(22) Date of filing: 05.10.2005
(51) Int. Cl.: C09D 163/00

(54) **RESIN COMPOSITION HAVING HYDROXYL GROUP FOR COATINGS, COATING COMPOSITION, METHOD OF FINISH COATING AND COATED ARTICLE**

(30) Priority: 08.10.2004 JP 2004296969
(71) Applicant: BASF Coatings Japan Ltd., Yokohama-shi Kanagawa 244-0815 (JP)
(72) Inventor: KONISHI, Tetsu, Kanagawa 238-0056 (JP); NIIMI, Rui, Fujisawa-shi, Kanagawa 251-0015 (JP); SHINOZAKI, Yuichi, Yokohama-shi, Kanagawa 244-0815 (JP)
(74) Representative: Fischer, Jens-Dieter W.E.
(86) International application number: PCT/IB2005/002978
(87) International publication number: WO 2006/048708

(57) **Abstract**

[Problem]

To provide hydroxyl group containing resin compositions for coating purposes, coating compositions, a finish-painting method and painted objects with which it is possible to obtain excellent painting operability and paint films which have excellent appearance, acid rain resistance, car washing damage resistance, solvent resistance, water resistance and weather resistance.

[Means of Resolution]

Coating compositions which have as the resin component a hydroxyl group containing resin composition for coating purposes which has a hydroxyl group value of from 50 to 400 mgKOH/g and a weight average molecular weight from 2,000 to 100,000 which has been obtained by copolymerizing, in the presence of (a) an acid compound which has one carboxyl group and two or more hydroxyl groups, (b) a radically polymerizable monomer which has an epoxy group and (c) another radically polymerizable monomer, or by subjecting a copolymer of (b) a radically polymerizable monomer which has an epoxy group with (c) another radically polymerizable monomer to an addition reaction with (a) an acid compound which has one carboxyl group and two or more hydroxyl groups.

## Description

### [Technical Field]

The invention concerns novel hydroxyl group containing resin compositions for coating purposes, coating compositions, a method of finish-painting and the painted objects. More precisely, the invention concerns compositions for coating purposes, coating compositions, a method of finish-painting and painted objects which have excellent coating operability in the automobile painting field and with which paint films which have an excellent appearance, and especially so with the wet-on-wet painting of a base coat and a clear coat, and which have excellent acid rain resistance, car washing damage resistance, solvent resistance, water resistance and weather resistance, can be obtained.

### [Background Technology]

Coating compositions comprising hydroxyl group containing acrylic resins and crosslinking agents which have functional groups which react with hydroxyl groups are often used in the automobile painting field. In the past copolymers of radically polymerizable monomers which have hydroxyl groups and other radically polymerizable monomers have been used in the main for the hydroxyl group containing acrylic resins which are used in these coating compositions, but more recently a demand has arisen in the automobile painting field for paints, and especially clear paints, which have acid rain resistance and car washing damage resistance, and so resins which have a higher hydroxyl group value are required.

For example, hydroxyl group containing resins obtained by means of an ester addition reaction of alkanoic acid mono-glycidyl esters and 2,2-dimethylolalkanoic acids which have from 6 to 8 carbon atoms are known (for example, see Patent Citation 1).
However, these hydroxyl group containing resins have a low molecular weight with a view to being solvent-free or having little solvent, and when the resins are used as base resins in paints for use on automobiles there is a problem in that it is impossible to obtain adequate durability.

Furthermore, high solid fraction coating compositions which are characterized by containing hydroxyl group containing compounds which are reaction products of carboxyl group containing compounds and epoxy group containing compounds and which have a weight average molecular weight of not more than 1,000 and a hydroxyl group value of from 200 to 800 along with polyisocyanate compounds and melamine resins are known (for example, see Patent Citation 2).
However, in the case of resins which have a weight average molecular weight of not more than 1,000, the separateness of the upper and lower layers cannot be achieved satisfactorily with the wet-on-wet painting method of a base coat paint and a clear paint which is generally used for painting automobiles, a state of paint mixing occurs at the boundary surface and there is a problem in that it is impossible to obtain a good paint film appearance.

In general, if the hydroxyl group value of a resin is high then the polarity of the resin is raised, its compatibility with low polarity solvents is reduced and a highly polar solvent is required as the diluting solvent, and in such a case there is also a further disadvantage in that the separateness from the base coat is inevitably reduced. Moreover, since the polarity of the resin is high, its compatibility with the crosslinking agent is reduced and appearance failure inevitably occurs, and the crosslinking agents which can be used are limited and it is difficult to achieve both good appearance and good performance. Moreover, when the hydroxyl group value of the resin is reduced to overcome these problems there is a further problem in that it is then difficult to achieve satisfactory performance in terms of acid resistance, car washing damage resistance and solvent resistance for example.

[Patent Citation 1]
   Japanese Unexamined Patent Application Laid Open. 2003-055313
[Patent Citation 2]
   Japanese Unexamined Patent Application Laid Open 2002-348529

### [Disclosure of the Invention]

### [Problems to be Resolved by the Invention]

The present invention is intended to provide hydroxyl group containing resin compositions for coating purposes which contain hydroxyl groups and which are of low polarity, coating compositions in which these hydroxyl group containing resin compositions for coating purposes are used, a method of finish-painting and painted products with which paint films can be obtained with excellent painting operability and with which the paint films obtained have an excellent appearance, especially with wet-on-wet painting on a base coat, and which have excellent acid rain resistance, car washing damage resistance, solvent resistance, water resistance and weather resistance.

### [Means of Resolving These Problems]

As a result of thorough research carried out with a view to resolving the abovementioned problems, the inventors have discovered that the abovementioned aims can be realized by using hydroxyl group containing resin compositions for coating purposes obtained by copolymerizing, in the presence of (a) an acid compound which has one carboxyl group and two or more hydroxyl groups, (b) a radically polymerizable monomer which has epoxy groups and (c) another radically polymerizable monomer, or which have been obtained by subjecting a copolymer of (b) a radically polymerizable monomer which has epoxy groups and (c) other radically polymerizable monomer to an addition reaction with (a) an acid compound which contains one carboxyl group and two or more hydroxyl groups, and the invention has been realized on the basis of these findings.

That is to say, the invention provides a hydroxyl group containing resin composition for coating purposes which contains a hydroxyl group containing resin which has been obtained by copolymerizing, in the presence of (a) an acid compound which has one carboxyl group and two or more hydroxyl groups, (b) a radically polymerizable monomer which has an epoxy group and (c) another radically polymerizable monomer, of which the hydroxyl group value is from 50 to 400 mgKOH/g and of which the weight average molecular weight is from 2,000 to 100,000.
Furthermore, the invention provides a hydroxyl group containing resin composition for coating purposes which contains a hydroxyl group containing resin which has been obtained by subjecting a copolymer of (b) a radically polymerizable monomer which has an epoxy group and (c) another radically polymerizable monomer to an addition reaction with (a) an acid compound which has one carboxyl group and two or more hydroxyl groups, of which the hydroxyl group value is from 50 to 400 mgKOH/g and of which the weight average molecular weight is from 2,000 to 100,000.

Furthermore, the invention provides a hydroxyl group containing resin composition for coating purposes in which the acid compound which has one carboxyl group and two or more hydroxyl groups is 2,2-dimethylolbutanoic acid or 2,2-dimethylolpropionic acid.
Furthermore, the invention provides a hydroxyl group containing resin composition for coating purposes where the hydroxyl groups of 100 parts by mass of the abovementioned hydroxyl group containing resin in the abovementioned hydroxyl group containing resin composition for coating purposes have been subjected to an addition reaction with less than 100 parts by mass of (d) a lactone compound.

Moreover, the invention provides a coating composition comprising the abovementioned hydroxyl group containing resin composition for coating purposes and a crosslinking agent which contains within each molecule at least one or more than one functional group which reacts with hydroxyl groups.
Moreover, it provides a method of finish-painting in which the abovementioned coating composition is painted on, and painted objects which have been painted in accordance with the abovementioned method of finish-painting.

### [Effect of the Invention]

The coating compositions of this invention have excellent coating operability and, in particular, provide paint films which have an excellent appearance on wet-on-wet coating with a base coat and which have excellent acid rain resistance, car washing damage resistance, solvent resistance, water resistance and weather resistance. Furthermore, the method of finish painting in which a coating composition of this invention is used provides an excellent appearance, and the painted objects also exhibit the aforementioned excellent paint film performance. [Embodiments of the Invention]

The acid compounds which contain one carboxyl group and two or more hydroxyl groups and which have from 5 to 10 carbon atoms are preferred for the acid compound which contains one carboxyl group and two or more hydroxyl groups which forms the (a) component which is used to obtain a hydroxyl group containing resin composition for coating purposes of this invention. The number of carbon atoms of the acid compound is more desirably within the range from 5 to 8, and most desirably 5 or 6. The upper limit for the number of hydroxyl groups is preferably not more than five, and most desirably not more than three. 2,2-dimethylolbutanoic acid or 2,2-dimethylolpropionic acid is preferred as an actual example of the acid compound (a) component, and 2,2-dimethylolbutanoic acid is most desirable since resins of lower polarity can then be obtained.

The (a) component acid compounds provide a resin which contains hydroxyl groups as a result of an addition reaction with the (b) component radically polymerizable monomer which has epoxy groups. The addition reaction of the (a) component acid compound and epoxy groups of the (b) component may take place before the copolymerization of the (b) component monomer and the (c) component monomer, during the copolymerization or after the copolymerization has been completed.

The amount of the (a) component acid compound compounded depends on the amount of (b) component and the hydroxyl group value of the resin, but it is preferably used in an amount within the range of not more than 1.2 mol per mol of epoxy group in the (b) component. If the amount of acid from the (a) component is more than 1.2 mol times the amount of epoxy group then there are cases where unreacted acid is precipitated out in the resin and this is undesirable. No particular limitation is imposed upon the lower limit of the amount of the (a) component acid compound which is compounded but at least 5 mass% in the resin solid fraction is preferred. In those cases where the carboxyl groups of the (a) component acid compound are in excess of the (b) component epoxy groups, the excess carboxyl groups of the (a) component acid compound cannot react with (b) component epoxy groups and so the (a) component acid compound which has no polymerizable double bonds may be present in an unreacted form in the hydroxyl group containing resin composition for coating purposes of this invention. On the other hand, if the (b) component epoxy groups are in excess of the carboxyl groups of the (a) component acid compound then the hydroxyl group containing resin obtained may have epoxy groups.

Furthermore, the radically polymerizable monomer which has epoxy groups and which is the (b) component which is used for obtaining a hydroxyl group containing resin composition for coating purposes of this invention is a monomer which has at least one radically polymerizable carbon-carbon double bond and an epoxy group, and the number of carbon-carbon double bonds is preferably not more than two and most desirably one. The (b) component may have functional groups other than the epoxy group, but those which do not react with the hydroxyl groups or carboxyl group of the (a) component are preferred, and those which have no functional groups other than the epoxy group are the most desirable. Actual examples of the (b) component include glycidyl acrylate, glycidyl methacrylate, 3,4-epoxycyclohexylmethyl acrylate, 3,4-epoxycyclohexylmethyl methacrylate and such like compounds, and one or a mixture of two or more of these compounds can be used.

The hydroxyl group value of the hydroxyl group containing resin is preferably within the range from 50 to 400 mgKOH/g, and most desirably within the range from 100 to 300 mgKOH/g, for obtaining a hardened paint film which has an excellent appearance and excellent solvent resistance, water resistance and weather resistance. In those cases where the hydroxyl group value is less than 50 there is a problem in that the acid rain resistance, car washing damage resistance, solvent resistance and weather resistance are reduced, and in those cases where it exceeds 400 mgKOH/g the compatibility is reduced and there is a problem in that the appearance is adversely affected.

Actual examples of the other radically polymerizable monomer which is the (c) component which is used to obtain a hydroxyl group containing resin composition for coating purposes of this invention include methyl acrylate, ethyl acrylate, n-propyl acrylate, isopropyl acrylate, n-butyl acrylate, isobutyl acrylate, sec-butyl acrylate, hexyl acrylate, cyclohexyl acrylate, 2-ethylhexyl acrylate, octyl acrylate, lauryl acrylate, stearyl acrylate, methyl methacrylate, ethyl methacrylate, n-propyl methacrylate, isopropyl methacrylate, n-butyl methacrylate, isobutyl methacrylate, sec-butyl methacrylate, hexyl methacrylate, cyclohexyl methacrylate, 2-ethylhexyl methacrylate, octyl methacrylate, lauryl methacrylate, stearyl methacrylate, styrene, acrylonitrile, methacrylonitrile, acrylamide and methacrylamide, and one or a mixture of two or more of these can be used.

Furthermore, the hydroxyl groups produced by the reaction of the (a) component and the (b) component and the hydroxyl groups of radically polymerizable monomers which have hydroxyl groups can also be used conjointly in a hydroxyl group containing resin composition for coating purposes in this invention.
Examples of these radically polymerizable monomers which have hydroxyl groups include 2-hydroxyethyl acrylate, 2-hydroxypropyl acrylate, 3-hydroxypropyl acrylate, 4-hydroxybutyl acrylate, 2-hydroxyethyl methacrylate, 2-hydroxypropyl methacrylate, 3-hydroxypropyl methacrylate, 4-hydroxybutyl methacrylate, allyl alcohol, the adduct of acrylic acid and versatic acid glycidyl ester, the adduct of methacrylic acid and versatic acid glycidyl ester, ε-caprolactone adducts of 2-hydroxyethyl acrylate, 2-hydroxypropyl acrylate, 3-hydroxypropyl acrylate, 4-hydroxybutyl acrylate, 2-hydroxyethyl methacrylate, 2-hydroxypropyl methacrylate, 3-hydroxypropyl methacrylate and 4-hydroxybutyl methacrylate and the ethylene oxide and/or propylene oxide adducts of 2-hydroxyethyl acrylate, 2-hydroxypropyl acrylate, 3-hydroxypropyl acrylate, 4-hydroxybutyl acrylate, 2-hydroxyethyl methacrylate, 2-hydroxypropyl methacrylate, 3-hydroxypropyl methacrylate and 4-hydroxybutyl methacrylate.

The lactone compounds which are used for the (d) component which is used for obtaining the hydroxyl group containing resin compositions for coating purposes of this invention are incorporated into the resin by means of a ring-opening addition reaction with the hydroxyl groups of the aforementioned hydroxyl group containing resin and they impart rubber-like elasticity to the hardened paint films which have been formed by the coating compositions, and especially the clear paint compositions, in which the hydroxyl group containing resins have been used as a result of the breakdown of the lactone, and they therefore provide a high level of car washing damage resistance.
Examples of said lactone compounds include β-methyl-δ-valerolactone, γ-valerolactone, δ-valerolactone, δ-caprolactone, γ-caprolactone, ε-caprolactone, β-propiolactone, γ-butyrolactone, γ-nonanoiclactone and δ-dodecanolactone, and of these ε-caprolactone is especially desirable. One of these lactone compounds can be used alone or a combination of two or more types can be used.

Furthermore, the method used for the addition reaction of said lactone may involve copolymerizing the radically polymerizable monomer which has epoxy groups component (b) with the other radically polymerizable monomer component (c) after carrying out an addition reaction of the lactone compound with the hydroxyl groups of the (a) component compound, or it may involve an addition reaction of the lactone compound after carrying out an addition reaction of the acid of the (a) component compound with the copolymer of the radically polymerizable monomer which has epoxy groups (b) and the other polymerizable monomer (c).

Said lactone compound is preferably used in an amount of less than 100 parts by mass, more desirably in an amount of from 0 to 50 parts by mass, and most desirably in an amount of from 5 to 45 parts by mass, per 100 parts by mass of the hydroxyl group containing resin obtained from the (a), (b) and (c) components. In those cases where the said lactone compound content is 100 parts by mass or more, the hardened paint film ultimately obtained is too soft and there is a deterioration in the appearance, solvent resistance, water resistance and weather resistance of the hardened paint film.

In this invention the weight average molecular weight of the hydroxyl group containing resin is from 2,000 to 100,000, and preferably from 3,000 to 30,000. If the weight average molecular weight is less than 2,000 then mixing with the base coat components is liable to arise in the case of wet-on-wet painting with a base coat and there is a problem in that the appearance of the paint film is adversely affected, and if it exceeds 100,000 then the compatibility is reduced and there is a problem in that the appearance of the paint film is adversely affected.

Furthermore, in a coating composition in which a hydroxyl group containing resin composition for coating purposes of this invention is used, the hydroxyl group containing resin is preferably used in an amount within the range from 5 to 95 mass%, and most desirably in an amount of from 30 to 85 mass%, with respect to the solid fraction of the component which has been unified with a crosslinking agent which has at least one functional group which can react with hydroxyl groups in a single molecule.
Examples of the crosslinking agents which have at least one functional group which reacts with hydroxyl groups in a single molecule which can be used in a coating composition of this invention include crosslinking resins which have functional groups such as blocked isocyanate groups and melamine resins, and these can be used individually or a combination of two or more types may be used. The number of functional groups which react with hydroxyl groups in the crosslinking agent is preferably at least two, and most desirably at least three, in a single molecule.

The coating compositions of this invention can be used as they are or with the addition of organic solvents and various additives such as ultraviolet absorbers, photo-stabilizers, antioxidants, surfactants, surface controlling agents, hardening reaction catalysts, anti-static agents, perfumes, dewatering agents and rheology controlling agents such as polyethylene wax, polyamide wax or internally crosslinked type fine resin particles for example, as required.
The coating compositions of this invention are most desirably used as clear paint compositions.

Examples of the method of finish-painting with a clear paint composition of this invention include the two-coat-one-bake finish painting methods in which a colored base coat is coated on the base material and then said clear paint composition is coated as a clear paint while this is still uncrosslinked, the overcoating finish-painting method in which a colored base coat is coated on the base material and a clear paint is coated while this is uncrosslinked and the two are baked at the same time and then said clear paint composition is coated as an overcoat clear paint and baked, and the finish painting method in which, in the abovementioned over-coat paint finish-coating method, a transparent primer paint is coated in order to ensure tight adhesion with the underlying clear coat and with this uncrosslinked said clear coating composition is coated as an overcoat clear paint.

The aforementioned colored base coat paint, clear paint, overcoat clear paint and transparent primer paint can be applied, after adjusting to the prescribed viscosity by adding organic solvent or reactive diluent and with heating if required, using the painting machines which are generally used for this purpose, such as an air sprayer, electrostatic air sprayer, roll coater, flow coater or a dipping system for example, or using a brush, a bar coater or an applicator for example. From among these methods spray painting is preferred.

Furthermore, examples of base material on which the coating compositions of this invention can be coated include organic and inorganic materials such as wood, glass, metals, cloth, plastics, foams, elastomers, paper, ceramics, concrete and plaster board. These base materials may be subjected to a surface treatment beforehand and the paint film can be formed on the pre-treated surface.

Examples of painted objects which can be obtained with the coating compositions of this invention include structures, wooden products, metal products, plastic products, rubber products, worked paper, ceramic products and glass products. In more practical terms these include automobiles, automobile parts (for example bodies, bumpers, spoilers, mirrors, wheels and internal decorative parts, these being made of various materials), metal sheets such as steel sheets, bicycles, bicycle parts, roadside parts (for example guard rails, traffic signs and sound deadening walls), tunnel parts (for example side wall plates), ships, railway rolling stock, domestic goods, musical instruments, domestic electrical goods, building materials, containers, office appliances, sports goods and toys.

### [Illustrative Examples]

The invention is described in more practical terms below by means of illustrative examples, but the invention is not limited in any way by these illustrative examples. Moreover, the performance of the paint films obtained with the clear paint compositions of this invention was determined in the following ways.

### (1) Paint Clouding Test

This was evaluated on the basis of the following criteria by means of visual observation.
O: No clouding observed in the paint.
Δ: Slight clouding seen in the paint.
X: The paint became white and turbid.

### (2) Appearance

The appearance was evaluated on the basis of the following criteria by means of visual observation.
O: When a fluorescent lamp was reflected in the paint film it was reflected clearly.
Δ: When a fluorescent lamp was reflected in the paint film there was slight blurring around the edges (the profile) of the reflection.
X: When a fluorescent lamp was reflected in the paint film there was marked blurring around the edges (the profile) of the reflection.

### (3) Acid Resistance

Acid Resistance: A 40% sulfuric acid aqueous solution (0.2 ml) was placed as a spot on the paint film on a test sheet which was then heated to 60°C for 15 minutes, after which the spot was washed off with water and the extent of formation of a stain mark on the paint film was observed visually.
O: Virtually no change of the paint film was seen.
Δ: A slight water stain mark was seen on the paint film.
X: A pronounced water stain mark was seen on the paint film.

### (4) Car Washing Damage Resistance

Scratching Resistance: Dirty water (JIS Z-8901-84, a mixture of grade 8 dust/water/neutral detergent in proportions by weight of 10/99/1) was coated with a brush on the paint film on a test sheet and then the car washing brush of a automobile washing machine was rotated for 10 seconds at 150 rpm on the test plate and the test plate was then washed with flowing water. This operation was repeated twice and the extent of scratching of the paint film surface of the test plate was measured using the L* values obtained using a color difference meter (CR-331 produced by the Minolta Camera Co.). The ΔL* value was calculated using the following equation and the scratching resistance was evaluated using this value.
ΔL* Value = L* value after testing - L* value before testing
O: ΔL* value less then 3
Δ: ΔL* value 3 or above but less than 4
X: ΔL* value 5 or above

### (5) Solvent Resistance

The change in the paint film on applying a load of about 1 kgf to a gauze which had been moistened with xylene and reciprocating this ten times over the paint film was observed visually and an evaluation was made on the basis of the following criteria.
O: No change in the paint film.
Δ: The paint film was partly dissolved.
X: The paint film was completely dissolved.

### (6) Water Resistance

After three months exposure outdoors in accordance with the weather resistance test of JIS K-5400 (1990) section 9.9 the color of the unwashed surface of the paint film was measured in accordance with the color meter measurement method for paint films of JIS K-5400 (1990) section 7.4.2 and then the specimen with the paint film was immersed in warm water at 40°C for 240 hours and the ΔL* value was calculated by subtracting the L* value before the test from the L* value after this immersion, and the whitening of the paint film was assessed. A smaller ΔL* value indicates a better result.

### (7) Weather Resistance

The state of the paint film was assessed visually after a 3000-hour exposure using a sunshine carbon arc lamp type accelerated weather resistance tester (JIS K-5400 (1990) section 9.8.1).

### Example of Production 1

### Preparation of the Hydroxyl Group Containing Resin Composition for Coating Purposes A-1

Xylene and 2,2-dimethylolbutanoic acid with the composition shown in Table 1 were introduced into a four-necked flask which had been furnished with a thermometer, a reflux condenser, a stirrer and a dropping funnel and heated while being stirred under a current of nitrogen and maintained at a temperature of 140°C. Then a mixture of monomer and polymerization initiator of the composition shown in Table 1 (the drip feed component) was added from the dropping funnel at a constant rate in a dropwise manner over a period of 2 hours at a temperature of 140°C. After the drip feed had been completed, the temperature was maintained at 140°C for a further period of 1 hour and then the reaction temperature was lowered to 110°C. Subsequently a polymerization initiator solution of the composition shown in Table 1 (supplementary catalyst) was added and the reaction was completed while maintaining the temperature at 110°C for 2 hours, and the hydroxyl group containing resin composition for coating purposes A-1 was obtained. The units for the numerical values in the table are all parts by mass.

### Example of Production 2

### Preparation of the Hydroxyl Group Containing Resin Composition for Coating Purposes A-2

Xylene and 2,2-dimethylolbutanoic acid with the composition shown in Table 1 were introduced into a four-necked flask which had been furnished with a thermometer, a reflux condenser, a stirrer and a dropping funnel and heated while being stirred under a current of nitrogen and maintained at a temperature of 140°C. Then a mixture of monomer and polymerization initiator of the composition shown in Table 1 (the drip feed component) was added from the dropping funnel at a constant rate in a dropwise manner over a period of 2 hours at a temperature of 140°C. After the drip feed had been completed, the temperature was maintained at 140°C for a further period of 1 hour and then the reaction temperature was lowered to 110°C. Subsequently the polymerization initiator solution of the composition shown in Table 1 (supplementary catalyst) was added and, after maintaining the temperature at 110°C for 2 hours, ε-caprolactam in the amount shown in Table 2 was introduced and the reaction was completed by maintaining a temperature of 150°C for a period of 3 hours and the hydroxyl group containing resin composition for coating purposes A-2 was obtained.

**Table 1**

| | | Ex. of Prod 1 | Ex. of Prod 2 |
|---|---|---|---|
| Hydroxyl group containing resin composition for coating purposes | | A-1 | A-2 |
| Initially Introduced (parts by mass) | Xylene | 60 | 60 |
| | 2,2-Dimethylol-butanoic acid | 20 | 26 |
| Drip Feed Component (parts by mass) | Glycidyl methacrylate | 20 | 25 |
| | n-Butyl acrylate | 20 | 10 |
| | n-Butyl methacrylate | 20 | 19 |
| | 2-Ethylhexyl methacrylate | 20 | - |
| | t-Butylperoxy-2-ethylhexanoate | 2 | 2 |
| Supplementar y Catalyst (parts by mass) | t-Butylperoxy-2-ethylhexanoate | 0.2 | 0.2 |
| | Xylene | 4.5 | 2 |
| Supplementar y Component (parts by mass) | ε-Caprolactam | - | 20 |
| | Xylene | - | 2.5 |
| Total (parts by mass) | | 166.7 | 166.7 |
| Hydroxyl group value of the resin (mgKOH/g) | | 228 | 296 |
| Non-volatile fraction (mass%) | | 61.3 | 61.3 |
| Weight average molecular weight | | 12,000 | 14,000 |

### Example of Production 3

### Preparation of the Hydroxyl Group Containing Resin Composition for Coating Purposes A-3

Xylene with the composition shown in Table 2 was introduced into a four-necked flask which had been furnished with a thermometer, a reflux condenser, a stirrer and a dropping funnel and heated while being stirred under a current of nitrogen and maintained at a temperature of 140°C. Then a mixture of monomer and polymerization initiator of the composition shown in Table 2 (the drip feed component) was added from the dropping funnel at a constant rate in a dropwise manner over a period of 2 hours at a temperature of 140°C. After the drip feed had been completed, the temperature was maintained at 140°C for a further period of 1 hour and then the reaction temperature was lowered to 110°C. Subsequently the polymerization initiator solution of the composition shown in Table 2 (supplementary catalyst) was added and the reaction was completed while maintaining the temperature at 110°C for 2 hours and the hydroxyl group containing resin composition for coating purposes A-3 was obtained.

### Example of Production 4

### Preparation of the Hydroxyl Group Containing Resin Composition for Coating Purposes A-4

Xylene with the composition shown in Table 2 was introduced into a four-necked flask which had been furnished with a thermometer, a reflux condenser, a stirrer and a dropping funnel and heated while being stirred under a current of nitrogen and maintained at a temperature of 140°C. Then a mixture of monomer and polymerization initiator of the composition shown in Table 2 (the drip feed component) was added from the dropping funnel at a constant rate in a dropwise manner over a period of 2 hours at a temperature of 140°C. After the drip feed had been completed, the temperature was maintained at 140°C for a further period of 1 hour and then the reaction temperature was lowered to 110°C. Subsequently the polymerization initiator solution of the composition shown in Table 2 (supplementary catalyst) was added and, after maintaining the temperature at 110°C for 2 hours, 2,2-dimethylolbutanoic acid and ε-caprolactam in the amounts shown in Table 2 were introduced and the reaction was completed by maintaining a temperature of 150°C for a period of 3 hours and the hydroxyl group containing resin composition for coating purposes A-4 was obtained.

**Table 2**

| | | Ex. of Prod 3 | Ex. of Prod 4 |
|---|---|---|---|
| Hydroxyl group containing resin composition for coating purposes | | A-3 | A-4 |
| Initially Introduced (parts by mass) | Xylene | 60 | 60 |
| | 2,2-Dimethylol-butanoic acid | - | - |
| Drip Feed Component (parts by mass) | Glycidyl methacrylate | 20 | 25 |
| | n-Butyl acrylate | 20 | 10 |
| | n-Butyl methacrylate | 20 | 19 |
| | 2-Ethylhexyl methacrylate | 20 | - |
| | t-Butylperoxy-2-ethylhexanoate | 2 | 2 |
| Supplementar y Catalyst (parts by mass) | t-Butylperoxy-2-ethylhexanoate | 0.2 | 0.2 |
| | Xylene | 4.5 | 2 |
| Supplementar y Component (parts by mass) | 2,2-Dimethylol-butanoic acid | 20 | 26 |
| | e-Caprolactam | - | 20 |
| | Xylene | - | 2.5 |
| Total (parts by mass) | | 166.7 | 166.7 |
| Hydroxyl group value of the resin (mgKOH/g) | | 228 | 296 |
| Non-volatile fraction (mass%) | | 61.3 | 61.3 |
| Weight average molecular weight | | 13,000 | 15,000 |

### Examples 5 to 7

The hydroxyl group containing resin compositions for coating purposes A-5 to A-8 for comparative purposes were obtained in the same way as in Example of Production 1 except that the raw materials were varied in the way shown in Table 3.

**Table 3**

| | | Ex. of Prod. 5 | Ex. of Prod. 6 | Ex. of Prod. 7 | Ex. of Prod. 8 |
|---|---|---|---|---|---|
| Hydroxyl group containing resin composition for coating purposes | | A-5 | A-6 | A-7 | A-8 |
| Initially Introduced (parts by mass) | Xylene | 60 | 60 | 60 | 60 |
| | Propionic acid | - | - | - | 10 |
| Drip Feed Component (parts by mass) | Glycidyl methacrylate | - | - | - | 20 |
| | 2-Hydroxyethyl methacrylate | 40 | 51 | 22 | 10 |
| | n-Butyl acrylate | 20 | 10 | 29 | 20 |
| | n-Butyl methacrylate | 20 | 19 | 29 | 20 |
| | 2-Ethylhexyl methacrylate | 20 | - | 20 | 20 |
| | t-Butylperoxy-2-ethylhexanoate | 2 | 2 | 2 | 2 |
| Supplementar y Catalyst (parts by mass) | t-Butylperoxy-2-ethylhexanoate | 0.2 | 0.2 | 0.2 | 0.2 |
| | Xylene | 4.5 | 2 | 2 | 2 |
| Supplementar y Component (parts by mass) | ε-Caprolactam | - | 20 | - | - |
| | Xylene | - | 2.5 | 2.5 | 2.5 |
| Total (parts by mass) | | 166.7 | 166.7 | 166.7 | 166.7 |
| Hydroxyl group value of the resin (mgKOH/g) | | 173 | 220 | 95 | 119.5 |
| Non-volatile fraction (mass%) | | 61.3 | 61.3 | 61.3 | 61.3 |
| Weight average molecular weight | | 10,000 | 11,000 | 12,000 | 13,000 |

### Examples of Production 9 to 17

### Production of Clear Paints CC-1 to CC-9

The raw materials indicated in Tables 4 and 5 were mixed sequentially and stirred until they became homogeneous mixtures to prepare clear paints.

**Table 4**

| | Ex. of Prod. 9 | Ex. of Prod. 10 | Ex. of Prod. 11 | Ex. of Prod. 12 |
|---|---|---|---|---|
| Clear Paint | CC-1 | CC-2 | CC-3 | CC-4 |
| Hydroxyl group containing resin Solution A-1 | 100 | 100 | - | - |
| Hydroxyl group containing resin Solution A-2 | - | - | 105 | - |
| Hydroxyl group containing resin Solution A-3 | - | - | - | 100 |
| Hydroxyl group containing resin Solution A-4 | - | - | - | - |
| Hydroxyl group containing resin Solution A-5 | - | - | - | - |
| Hydroxyl group containing resin Solution A-6 | - | - | - | - |
| Hydroxyl group containing resin Solution A-7 | - | - | - | - |
| Hydroxyl group containing resin Solution A-8 | - | - | - | - |
| Crosslinking Agent Yuban SE-60¹⁾ | 30 | - | 25 | 30 |
| Crosslinking Agent Desmodure N3200²⁾ | - | 60 | - | - |
| Ultraviolet Absorber Solution ³⁾ | 7 | 7 | 7 | 7 |
| Photo-stabilizer Solution⁴⁾ | 7 | 7 | 7 | 7 |
| Surface Controlling Agent Solution⁵⁾ | 2 | 2 | 2 | 2 |
| Solvent 100⁶⁾ | 15 | 15 | 15 | 15 |
| Total (Parts by Mass) | 161 | 191 | 161 | 161 |
| Hydroxyl Group Containing Resin Solid Fraction (parts by mass) | 61.3 | 61.3 | 64.4 | 61.3 |
| Crosslinking Agent Solid Fraction (parts by mass) | 18 | 60 | 15 | 18 |
| Hydroxyl Group Containing Resin/Crosslinking Agent (Mass ratio of solid fractions) | 77.3/22.7 | 50.5/49.5 | 81.2/18.8 | 77.3/22.7 |

**Table 5**

| | Ex. of Prod. 13 | Ex. of Prod. 14 | Ex. of Prod. 15 | Ex. of Prod. 16 | Ex. of Prod. 17 |
|---|---|---|---|---|---|
| Clear Paint | CC-5 | CC-6 | CC-7 | CC-8 | CC-9 |
| Hydroxyl group containing resin Solution A-1 | - | - | - | - | - |
| Hydroxyl group containing resin Solution A-2 | - | - | - | - | - |
| Hydroxyl group containing resin Solution A-3 | - | - | - | - | - |
| Hydroxyl group containing resin Solution A-4 | 105 | - | - | - | - |
| Hydroxyl group containing resin Solution A-5 | - | 100 | - | - | - |
| Hydroxyl group containing resin Solution A-6 | - | - | 100 | - | - |
| Hydroxyl group containing resin Solution A-7 | - | - | - | 80 | - |
| Hydroxyl group containing resin Solution A-8 | - | - | - | - | 85 |
| Crosslinking Agent Yuban SE-60¹⁾ | 25 | 30 | 39 | 50 | 45 |
| Crosslinking Agent Desmodure N3200²⁾ | - | - | - | - | - |
| Ultraviolet Absorber Solution³⁾ | 7 | 7 | 7 | 7 | 7 |
| Photo-stabilizer Solution⁴⁾ | 7 | 7 | 7 | 7 | 7 |
| Surface Controlling Agent Solution⁵⁾ | 2 | 2 | 2 | 2 | 2 |
| Solvent 100⁶⁾ | 15 | 15 | 15 | 15 | 15' |
| Total (Parts by Mass) | 161 | 161 | 161 | 161 | 161 |
| Hydroxyl Group Containing Resin Solid Fraction (parts by mass) | 64.4 | 61.3 | 61.3 | 49.0 | 52.1 |
| Crosslinking Agent Solid Fraction (parts by mass) | 15 | 18 | 18 | 30 | 27 |
| Hydroxyl Group Containing Resin/Crosslinking Agent (Mass ratio of solid fractions) | 81.2/18.8 | 77.3/22.7 | 77.3/22.7 | 61.8/38.2 | 65.7/34.3 |

| | | | | | |
|---|---|---|---|---|---|
| < Notes for Table 4 and Table 5 > 1) Yuban 20ES-60: Trade name, a melamine resin solution (involatile fraction 60 mass%) produced by the Mitsui Kagaku Co. 2) Desmodure N3200: Trade name, a biuret type resin of liquid HDI (involatile fraction 100 mass%, NCO content 23 mass%) produced by the Sumitomo Kagaku Bayer Urethane Co. 3) Tinuvin 900: Trade name, an ultraviolet absorbing agent (20 mass% xylene solution), produced by the Ciba Specialty Chemicals Co. 4) Tinuvin 292: Trade name, a photo-stabilizer (20 mass% xylene solution), produced by the Ciba Specialty Chemicals Co. 5) BYK-300: Trade name, surface controlling agent (10 mass% xylene solution), produced by the Bikkukemii Co. 6) Sorbesso 100: Trade name, aromatic petroleum naphtha, produced by the Esso Co. | | | | | |

### Examples 1 to 5

### Specimen Production and Investigation of Paint Film Performance

The cationic electro-deposition paint Aqua No. 4200 (trade name, produced by the Nippon Oil and Fat/BASF Coatings Co.) was electro-deposition coated in such a way as to provide a dry film thickness of 20 µm on a zinc phosphate treated mild steel sheet and then baked for 25 minutes at 175°C, and then the mid-coat paint HS-H300 (trade name, produced by the Nippon Oil and Fat/BASF Coatings Co.) was pained on with an air sprayer in such a way as to provide a dry film thickness of 30 µm and this was baked for 30 minutes at 140°C. Next Belcoat No. 6000 white (trade name, produced by the Nippon Oil and Fat/BASF Coatings Co., Color: white), which is a solvent-based base coat paint, was painted on with an air sprayer in such a way as to provide a dry film thickness of 15 µm and, after setting for 3 minutes at 20°C, one of the clear paints CC1 to CC-5 diluted with Sorbesso 100 (trade name, aromatic petroleum naphtha, produced by the Esso Co.), to the painting viscosity (25 seconds at 20°C, Ford Cup No. 4) was painted on with an air sprayer using the wet-on-wet system so as to provide a dry film thickness of 40 µm in each case and then this was baked for 30 minutes at 140°C to prepare the specimens.

In the case of just the water resistance test sheets in Examples 1 to 5 the base coat paint was replaced with Belcoat No. 6000 black (trade name, produced by the Nippon Oil and Fat/BASF Coatings Co., Color: black.)
The paint film performances are shown in Table 6, and it can be seen that in all cases no clouding of the paint occurred and a paint film which had an even gloss was obtained, and that the appearance, acid resistance, car washing damage resistance, water resistance, solvent resistance and weather resistance were excellent.

**Table 6**

| | Example 1 | Example 2 | Example 3 | Example 4 | Example 5 |
|---|---|---|---|---|---|
| Clear Paint | CC-1 | CC-2 | CC-3 | CC-4 | CC-5 |
| Clouding of the paint | ○ | ○ | ○ | ○ | ○ |
| Appearance | O | O | O | O | O |
| Acid Resistance | O | O | O | O | O |
| Car washing damage resistance | O | O | O | O | O |
| Water resistance | 0.3 | 0.2 | 0.5 | 0.4 | 0.3 |
| Solvent resistance | ○ | ○ | ○ | ○ | ○ |
| Weather resistance | No abnormality | No abnormality | No abnormality | No abnormality | No abnormality |

### Comparative Examples 1 to 4

### Specimen Production and Investigation of Paint Film Performance

Specimens were produced in the same way as in Example 1 except that the clear paints CC-6 to CC-9 were used. The paint film performances are shown in Table 7, and in Comparative Examples 1 and 2 the compatibility of the main resin with the crosslinking agent, and with the solvent, was poor and clouding occurred in the paint, and there was also a marked fall in the gloss effect in terms of the appearance. Furthermore, in Comparative Example 3 there was no clouding of the paint and a paint film which had a uniform gloss was obtained, but the acid resistance and car washing damage resistance were poor. In Comparative Example 4 the acid rain resistance, car washing damage resistance and water resistance were all lower.

**Table 7**

| | Comp. Ex. 1 | Comp. Ex. 2 | Comp. Ex. 3 | Comp. Ex. 4 |
|---|---|---|---|---|
| Clear Paint | CC-6 | CC-7 | CC-8 | CC-9 |
| Clouding of the paint | X | X | ○ | ○ |
| Appearance | X | X | ○ | Δ |
| Acid Resistance | ○ | ○ | X | Δ |
| Car washing damage resistance | ○ | X | Δ | ○ |
| Water resistance | 0.5 | 0.8 | 1.4 | 1.1 |
| Solvent resistance | ○ | ○ | ○ | ○ |
| Weather resistance | No abnormality | No abnormality | No abnormality | No abnormality |

## Claims

1. A hydroxyl group containing resin composition for coating purposes which contains a hydroxyl group containing resin which has been obtained by copolymerizing, in the presence of (a) an acid compound which has one carboxyl group and two or more hydroxyl groups, (b) a radically polymerizable monomer which has an epoxy group and (c) another radically polymerizable monomer, of which the hydroxyl group value is from 50 to 400 mgKOH/g and of which the weight average molecular weight is from 2,000 to 100,000.

2. A hydroxyl group containing resin composition for coating purposes which contains a hydroxyl group containing resin which has been obtained by subjecting a copolymer of (b) a radically polymerizable monomer which has an epoxy group and (c) another radically polymerizable monomer to an addition reaction with (a) an acid compound which has one carboxyl group and two or more hydroxyl groups, of which the hydroxyl group value is from 50 to 400 mgKOH/g and of which the weight average molecular weight is from 2,000 to 100,000.

3. The hydroxyl group containing resin composition for coating purposes disclosed in claim 1 or claim 2 in which the acid compound which has one carboxyl group and two or more hydroxyl groups is 2,2-dimethylolbutanoic acid or 2,2-dimethylolpropionic acid.

4. The hydroxyl group containing resin composition for coating purposes disclosed in any of claims 1 to 3 where the hydroxyl groups of 100 parts by mass of the hydroxyl group containing resin disclosed in any on claims 1 to 3 have been subjected to an addition reaction with less than 100 parts by mass of (d) a lactone compound.

5. A coating composition comprising the hydroxyl group containing resin composition for coating purposes disclosed in any on claims 1 to 4 and a crosslinking agent which contains within each molecule at least one or more than one functional group which reacts with hydroxyl groups.

6. A method of finish-painting in which the coating composition disclosed in claim 5 is painted on.

7. A painted object which has been painted in accordance with the method of finish-painting of claim 6.
